# EUROPÄISCHE PATENTANMELDUNG

(11) **EP 2 722 313 A1**
(43) Veröffentlichungstag der Anmeldung: **23.04.2014**
(21) Anmeldenummer: 13188620.2
(22) Anmeldetag: 15.10.2013
(51) Int. Cl.: C03B 5/14, C03B 5/00, C03B 27/02, B09B 3/00, C03C 1/00, F23J 15/00

(54) **Thermische Behandlung von Mineralwolle**

(30) Priorität: 17.10.2012 DE 102012218878
(71) Anmelder: Currenta GmbH & Co. OHG, 51368 Leverkusen (DE)
(72) Erfinder: Bornewasser, Ulrich, 51377 Leverkusen (DE); Beyer, Joachim, 51515 Kürten (DE); Kanefke, Rico, 51519 Odenthal (DE)
(74) Vertreter: BIP Patents

(57) **Zusammenfassung**

Die vorliegende Erfindung betrifft ein Verfahren zum Recycling von Mineralwolleabfall enthaltend Glaswollefasern und/oder Steinwollefasern, wobei der Mineralwolleabfall in eine Prozesskammer eingeführt wird und mittels Durchmischung unter thermischer Behandlung in eine Schmelze überführt wird, wobei die Schmelze aus der Prozesskammer ausgetragen wird. Weiterhin betriff der Gegenstand der vorliegenden Erfindung ein Mineralwoll-Recyclingprodukt sowie dessen Verwendung als Baustoff.

## Beschreibung

Die Erfindung betrifft ein Verfahren zur thermischen Behandlung von Mineralwolle, insbesondere ein Verfahren zum Recycling von Mineralwolleabfall, das Recyclingprodukt des Mineralwolleabfalls, sowie deren Verwendung.

Als Mineralwolle werden Stoffe aus Glaswolle und Steinwolle bezeichnet. Die chemische Zusammensetzung der anorganischen Phase des Mineralwolleabfalls kann folgende Bestandteile enthalten: SiO2, Al203, CaO, MgO, Na2O+K2O, B203, P205 und/oder Fe203.

Mineralwolle ist ein besonders wirksamer, nichtbrennbarer Dämmstoff. Er ist vielseitig einsetzbar vom Keller bis zum Dach, im Neubau und bei der Modernisierung, im Wohnungs- und Gewerbebau und der Dämmung von Industrieanlagen. Steinwolle wird darüber hinaus als erdeloses Substrat zur Hydrokultur im industriellen Gemüse- und Zierpflanzenanbau eingesetzt.

Ein Nachteil der Mineralwolle ist, dass Mineralwolle sich praktisch nicht zersetzt, so dass Mineralwolleabfälle ein umweltbelastendes Potential aufweisen und die Fasern der Mineralwolleabfälle ein gewisses Lungentoxikologisches Potential aufweisen können. Ferner sind Mineralwolleabfälle, insbesondere Glaswolleabfälle, mit Bindemitteln oder anderen organischen Stoffen und anorganischen Stoffen verunreinigt.

Bislang werden Mineralwolleabfälle häufig deponiert. Die Deponierung ist sehr platzintensiv und nimmt daher ein großes Deponievolumen ein. Aufgrund der Langzeitbeständigkeit der Mineralwolle ist diese Art der Abfallbeseitigung besonders nachteilig.

Aus der US 2002/0000100 A1 sind ein Verfahren und eine Vorrichtung zum Zuführen von Mineralwolleabfall zu einer Gasschmelze bekannt, bei welcher Mineralwolleabfall einer aus einem Glasschmelzofen ausfließenden Glasschmelze hinzudosiert wird, wobei der Mineralwolleabfall durch die in der Glasschmelze herrschende Temperatur ebenfalls schmilzt und sich mit der Glasschmelze vermischt. Mineralwolleabfälle besitzen eine hervorragende wärmeisolierende Eigenschaft. Dieses Verfahren hat den Nachteil, dass die Mineralwolleabfälle nicht mittels Durchmischung bei der thermischen Behandlung in die Schmelze überführt werden, so dass die Mineralwolleabfälle aufgrund fehlender Durchmischung während des Schmelzvorgangs, einen hohen Energieeintrag erfordern, um in die Schmelze überführt zu werden.

Aus der EP 2 072 474 sind ein Verfahren und eine Vorrichtung zum Zuführen von Mineralwolleabfall zu einer Gasschmelze bekannt, bei welcher die Glaswolle in einem Glasschmelzofen in eine Schmelze überführt wird. Auch dieses Verfahren hat den Nachteil, dass die Mineralwolleabfälle nicht mittels Durchmischung bei der thermischen Behandlung in die Schmelze überführt werden, so dass auch hier ein hoher Energieeintrag erforderlich ist, um die Mineralwolleabfälle in die Schmelze zu überführen.

Ein weiterer Nachteil der bekannten Schmelzverfahren ist es, das aufgrund der hervorragenden wärmeisolierenden Eigenschaft der Mineralwolleabfälle, diese nur unvollständig in die Schmelze übergehen, so dass die erkaltete Schmelze Mineralwolle und/oder Mineralwollefasern aufweist. Der Einschluss von Mineralwolle und/oder Mineralwollefasern kann zu einem klumpigen Produkt mit schlechter Rieselfähigkeit führen.

Aufgabe der vorliegenden Erfindung ist es, ein Verfahren zur thermischen Mineralwolle-Behandlung zur Verfügung zu stellen, bei der der Energieeintrag beim Schmelzen von Mineralwolleabfällen gesenkt werden kann und/oder der Einschluss von Mineralwolle und/oder Mineralwolle-fasern verhindert werden kann, unabhängig von der Belastung der Mineralwolle durch Abfälle, umfassend Schadstoffe.

Diese Aufgabe wird durch ein Verfahren zum Recycling von Mineralwolleabfall enthaltend Glaswollefasern und/oder Steinwollefasern, gelöst, wobei der Mineralwolleabfall in eine Prozesskammer eingeführt wird und mittels Durchmischung unter thermischer Behandlung in eine Schmelze überführt wird, wobei die Schmelze aus der Prozesskammer ausgetragen wird.

Durch die thermische Behandlung im Drehrohrofen werden organische Bestandteile oder Verunreinigungen aus den Mineralfasern vollständig entfernt. Mögliche verbliebene organische Bestandteile in den entstehenden Rauchgasen werden in der Nachbrennkammer bei hohen Temperaturen vollständig zerstört. Die hierbei freiwerdende Verbrennungswärme kann zur Dampferzeugung genutzt werden. Die Rauchgase können in einem mehrstufigen System aufwendig gereinigt werden.

Das erfindungsgemäße Verfahren ermöglicht in vorteilhafter Weise ein vollständiges aufschmelzen des Mineralwolleabfalls.

Der Begriff "vollständig schmelzen", bedeutet im Zusammenhang mit der vorliegenden Erfindung, dass ein faserfreies Mineralwolle-Schmelzprodukt erhältlich ist. Die so erhaltene vollständig geschmolzene, faserfreie Mineralwolleschmelze wird auch als "homogene Schmelze" im Zusammenhang mit der vorliegenden Erfindung bezeichnet.

Es hat sich in überraschender Weise gezeigt, dass die zum Schmelzen der Mineralwolleabfälle notwendige Energie, während der thermischen Behandlung in der Prozesskammer, mittels Durchmischung der Mineralwolleabfälle deutlich gesenkt werden kann. Somit kann der Energiebedarf, um die Mineralwollefasern des Mineralwolleabfalls in der Prozesskammer vollständig zu schmelzen bei einer Durchmischung des Mineralwolleabfalls deutlich geringer im Vergleich zu einem Verfahren, bei dem der Mineralwolleabfall während der Wärmebehandlung nicht durchmischt wird.

Der Prozess zur Behandlung des Mineralwolleabfalls kann bei dem erfindungsgemäßen verfahren gestartet werden, ohne dass eine Glasschmelze oder dergleichen bereits vorliegen muss, in die der Mineralwolleabfall eingebracht wird.

Ohne auf eine bestimmte Theorie festgelegt zu werden, wird angenommen, dass die Durchmischung während der Wärmebehandlung die Entstehung bzw. Aufrechterhaltung von kalten Zonen, aufgrund der guten thermisch isolierenden Eigenschaften der Mineralwolle, deutlich verringert, so dass sich ein schneller und effizienter Energieeintrag zur Erzeugung der Schmelze ergibt.

Gemäß einer Ausführungsform der Erfindung ist die Durchmischung während der thermischen Behandlung in der Prozesskammer kontinuierlich.

Die Durchmischung kann vorzugsweise während der gesamten thermischen Behandlung in der Prozesskammer kontinuierlich oder periodisch erfolgen. Die kontinuierliche Durchmischung hat gegenüber der periodischen, d.h. einer Durchmischung mit Unterbrechungen, den Vorteil, dass der Energieeintrag zur Überführung des Mineralwolleabfalls in die vollständige Schmelze niedriger bzw. effizienter ist.

Die Durchmischung kann beispielsweise durch eine Rotationsbewegung der Prozesskammer erfolgen. Die Rotationsbewegung kann eine kontinuierliche oder periodisch unterbrochene Drehbewegung der Prozesskammer sein. Die Drehung kann eine gleichmäßige Drehgeschwindigkeit oder eine ungleichmäßige Drehgeschwindigkeit aufweisen.

Gemäß einer weiteren Ausführungsform kann die Rotationsgeschwindigkeit während des Schmelzvorganges geändert werden.

Gemäß einer Ausführungsform wird das Verfahren als Durchlaufverfahren betrieben, das bedeutet, dass der Mineralwolleabfall kontinuierlich an der Beschickungsseite der Prozesskammer eingeführt und an der Austrittstelle als Schmelze ausgetragen wird.

Bevorzugt ist eine gleichmäßige Rotationsgeschwindigkeit der Prozesskammer, um die zentrale Achse, wobei die Prozesskammer bevorzugt als Röhre ausgebildet ist.

Gemäß einer Ausführungsform ist die Prozesskammer, in der die kontinuierliche oder periodische Durchmischung erfolgt, als Drehrohrofen ausgebildet.

Mineralwollefasern haben den Nachteil, dass diese beim Transport und bei der Beschickung der Prozesskammer leicht verwirbeln. Das Austreten von Mineralwollefasern kann zu einer Verunreinigung der Umgebung und zu einer Gesundheitsgefährdung des Bedienpersonals durch die in der Atemluft enthaltende Mineralwolleabfallfasern führen.

Gemäß einer Ausführungsform kann die Mineralwolle in komprimierter Form, in Form von Gebinden und/oder enthaltend in Behältern in die Prozesskammer eingeführt werden. Dies hat den Vorteil, dass Mineralwollefasern bei der Beschickung der Prozesskammer nicht austreten.

Gemäß einer Ausführungsform ist die Prozesskammer entlang der Rotationsachse, ausgehend von der Beschickungsseite in Richtung zur Austrittsseite gegenüber der Horizontalen geneigt, so dass der Mineralwolleabfall bei der Rotationsbewegung, beispielsweise aufgrund der Schwerkraft, von der Beschickungsseite in Richtung zur Austrittsseite bewegt wird.

Gemäß einer Ausführungsform weist der Neigungswinkel (N) einen Winkel von ≥ 0,5° bis ≤ 5°, vorzugsweise von ≥ 1° bis ≤ 3°, bevorzugt von ≥ 1,5° bis ≤ 2,5° und besonders bevorzugt 2° auf.

Der Neigungswinkel (N) ist der Winkel, der sich aus der zentralen Rotationsachse der Prozesskammer zur horizontalen Ebene ergibt.

Die Prozesskammer kann aber auch innenliegende Trennmittel aufweisen, die eine Vorwärtsbewegung bei einer Rotationsbewegung in der Prozesskammer bewirken.

Aufgrund der Durchmischung des Mineralwolleabfalls kann während des Schmelzvorgangs der Einschluss von nicht vollständig geschmolzenem Mineralwolleabfall in der an der Austrittsseite austretenden Schmelze verhindert werden.

Gemäß einer Ausführungsform kann der Mineralwolleabfall mit einer Geschwindigkeit von ≥ 1 m/h bis ≤ 50 m/h, vorzugsweise von ≥ 2 m/h bis ≤ 30 m/h, bevorzugt von ≥ 5 m/s bis ≤ 20 m/h, und besonders bevorzugt von ≥ 7 m/h bis ≤ 15 m/h, durch die Prozesskammer bewegt werden.

Die Geschwindigkeit mit der der Mineralwolleabfall durch die Prozesskammer bewegt wird, kann sich aus dem Neigungswinkel der Prozesskammer zur horizontalen Ebene und der Rotationsgeschwindigkeit ergeben.

Die Verweildauer des Mineralwolleabfalls in der Prozesskammer kann ≥ 10 min bis ≤ 600 min, vorzugsweise ≥ 30 min bis < 300 min, und bevorzugt > 60 min bis < 90 min ausmachen.

Die Rotationsgeschwindigkeit der Prozesskammer kann ≥ 0,5 U/h bis ≤ 60 U/h, vorzugsweise > 2 U/h bis ≤ 20 U/h, bevorzugt > 4 U/h bis < 10 U/h und weiter bevorzugt > 6 U/h bis < 8 U/h, um die zentrale Rotationsachse, ausmachen. Je nach Auslegung der Prozesskammer kann die Rotationsgeschwindigkeit der Prozesskammer auch > 60 U/min aufweisen.

Der Mineralwolleabfall kann von der Beschickungsseite bis zur Austrittseite der Schmelze in der Prozesskammer Temperaturzonen mit einer gleichbleibenden Temperatur oder unterschiedlichen Temperaturen, vorzugsweise Temperaturzonen mit nachfolgend jeweils höheren Temperaturen, ausgesetzt werden.

Die Prozesskammer kann auch einen Temperaturgradienten aufweisen, wobei die Temperatur vorzugsweise von der Beschickungsseite des Mineralwolleabfalls zur Austrittseite der Schmelze zunimmt oder die Temperatur nimmt zur Mitte der Prozesskammer zu und zum Ende der Prozesskammer wieder ab. Die Prozesskammer kann vorzugsweise als Drehrohr ausgestaltet sein.

Der Prozesskammer können sauerstoffhaltige Gase, beispielsweise zur Förderung der Oxidation organischer Bestandteile und/oder zur Temperaturregulierung, zugeleitet werden.

Die Zugabe Sauerstoffhaltiger Gases wird derart geregelt, d.h. auf ein notwendiges Minimum beschränkt, um bei vollständiger Oxidation der organischen Stoffe, die Verwehung von Fasern in nachgeschaltete Anlagenteile zu vermeiden.

Die Temperatur in der Prozesskammer oder in Temperaturzonen der Prozesskammer können in einem Bereich von ≥ 700° C bis ≤ 1500° C, vorzugsweise von ≥ 1100° C bis ≤ 1250° C, und außerdem von ≥ 1150° C bis ≤ 1200° C, gehalten werden.

Es hat sich bei dem erfindungsgemäßen Verfahren gezeigt, dass es vorteilhaft sein kann, wenn wenigstens die Schmelze eine Temperatur von ≥ 850° C bis ≤ 1400° C, vorzugweise von ≥ 1050° C bis ≤ 1250° C, und bevorzugt von ≥ 1150° C bis ≤ 1200° C, aufweist.

Bei Maximaltemperaturen von > 1300° C in der Prozesskammer kann man ein klumpiges Material erhalten. Folglich sind Prozesskammertemperaturen oberhalb von 1300° C weniger bevorzugt, da diese Temperaturen zu Agglomeraten mit größerer Korngrößenverteilung und insbesondere zu größeren Konglomeraten aus mehreren solcher Agglomerate führen können, die anschließend, um diese weiterverarbeitungsfähig zu machen, gebrochen bzw. zerkleinert werden müssten. Die Weiterverarbeitung derartiger Agglomerate ist somit mit hohem Energieaufwand verbunden, weshalb zu hohe Temperaturen in der Prozesskammer weniger bevorzugt sein können.

Bei Maximaltemperaturen in der Prozesskammer von < 1000° C, kann die Schmelze trotz der Durchmischung des Mineralwolleabfalls noch Faserrückstände aufweisen. Deshalb können zu niedrig gewählte Maximaltemperaturen in der Prozesskammer ebenfalls weniger bevorzugt sein.

In Abhängigkeit der Faserqualität müssen gezielt bestimmte Bedingungen eingestellt werden, um ein vollständiges Aufschmelzen der Fasern und eine vollständige Entfernung der Organik zu gewährleisten.

Die in der Prozesskammer und vorzugsweise in Bereichen der Prozesskammer vorherrschende Temperatur kann durch wenigstens ein Temperatur-Messelement gemessen werden. Mittels der Temperarturerfassung kann die Temperatur in der Prozesskammer geregelt werden.

Geeignete Messelemente sind beispielsweise Sensoren, wie Thermoelemente.

Vorzugsweise wird eine Infrarot-Wärmebildkamera eingesetzt, die eine differenzierte Ermittlung der Schmelztemperatur und/oder der Temperaturgradienten in der Prozesskammer ermöglicht.

Die Temperaturregelung, beispielsweise über die Erfassung der Ist-Werte und der Regulierung der Temperatur auf die gewählten Sollwerte, erlaubt eine optimale Prozessführung. Durch diese Temperaturregulierung kann man eine homogene Schmelze, die frei von Mineralwollefasern und organischen Bestandteilen ist, erhalten.

Die Regelung der Temperatur in der Prozesskammer kann vorzugsweise über die Brennstoffmenge geregelt werden. Als Brennstoff können vorzugsweise brennbare Abfälle eingesetzt werden. Hierdurch können CO₂-Emissionen vermieden werden, da Primärbrennstoffe eingespart werden.

Erfindungsgemäß können > 0 Gew.-% bis < 100 Gew.-%, vorzugsweise ≥ 10 Gew.-% bis < 99,9 Gew.-%, weiter bevorzugt > 30 Gew.-% bis < 99,7 Gew.-% und bevorzugt > 50 Gew.-% bis < 99,5 Gew.-%, bezogen auf den Gesamtanteil an brennbarem Material, als brennbarer organischer Abfall, zur Wärmeenergieversorgung bzw. Befeuerung der Prozesskammer, eingesetzt werden. Festförmige, organische, brennbare Abfälle können der Prozesskammer mit dem Mineralwolleabfall zugegeben werden.

Flüssige, organische, brennbare Abfälle können, beispielsweise über eine Lanze, getrennt von dem Mineralwolleabfall in der Prozesskammer verbrannt werden.

Beispielsweise können flüssige, organische, brennbare Abfälle mit einem Anteil > 0 Gew.-% bis ≤ 100 Gew.-%, bevorzugt > 50 Gew.-% bis < 99,9 Gew.-% und bevorzugt > 70 Gew.-% bis < 99,5 Gew.-%, der Prozesskammer, bezogen auf den Gesamtanteil an brennbarem Material, getrennt von dem Mineralwolleabfall, zwecks Verbrennung zugeführt werden.

Festförmige, organische, brennbare Abfälle können mit einem Anteil > 0 Gew.-% bis < 30 Gew.- %, bevorzugt > 30 Gew.-% bis < 40 Gew.-% und bevorzugt > 40 Gew.-% bis < 50 Gew.-%, der Prozesskammer, bezogen auf den Gesamtanteil an brennbarem Material, zusammen mit dem Mineralwolleabfall, zwecks Verbrennung zugeführt werden.

Durch diese Maßnahme kann vollständig oder zumindest teilweise auf den Einsatz von primären Energieträgern, wie Erdöl und/oder Erdgas, verzichtet werden.

Die Mineralwolleabfälle weisen im Wesentlichen anorganische Bestandteile, umfassend mineralische Bestandteile, wie Salze, und organische Bestandteile, üblicherweise organische Bindemittelanteile auf.

Mineralwolleabfalls kann folgende Bestandteile enthalten: SiO₂, Al₂O₃, CaO, MgO, Na₂O+K₂O, B₂O₃, P₂O₅ und/oder Fe₂O₃ sowie ggf. andere Metalloxide in geringen Anteilen, wobei diese Bestandteile mit folgendem Gewichtsanteil bezogen auf das Gesamtgewicht der Mineralwolle enthalten sein können:

| | |
|---|---|
| SiO₂ | 35% bis 70 % |
| Al₂O₃ | 0% bis 27 % |
| CaO | 4% bis 20 % |
| MgO | 0% bis 6 % |
| Na₂O + K₂O | 0% bis 20 % |
| B₂O₃ | 0% bis 10 % |
| P₂O₅ | 0% bis 5 % |
| Fe₂O₃ | 0% bis 15 % |
| andere Oxide | 0% bis 5 %. |

Mineralische Begleitstoffe der Mineralwolleabfälle sind insbesondere wasserlösliche, anorganische Bestandteile, wie Salze.

Mittels des erfindungsgemäßen Verfahrens können die anorganischen Bestandteilen des Mineralwolleabfalls von den organischen Bestandteilen befreit werden. Hierbei werden die organischen Bestandteile des Mineralwolleabfalls oxidiert. Die oxidierten organischen Bestandteile werden der Prozesskammer als Rauchgas entzogen und gegebenenfalls weiteren Behandlungsschritten zur Abgasreinigung ausgesetzt.

Neben den oxidierten organischen Bestandteilen werden weitere gegebenenfalls enthaltende flüchtige anorganische Verbindungen im Rauchgas aus der Prozesskammer abgeführt und gegebenenfalls weiteren Behandlungsschritten zur Abgasreinigung ausgesetzt. Durch die Oxidation der organischen Bestandteile in der Prozesskammer wird bereits ein Teil in Kohlendioxid überführt.

Gemäß einer Ausführungsform wird das Rauchgas nach dem Verlassen der Prozesskammer wenigstens einem weiteren Temperaturbehandlungsschritt und/oder wenigstens einem weiteren Reinigungsbehandlungsschritt ausgesetzt wird

Die von organischen Bestanteilen gereinigte Schmelze des Mineralwolleabfalls kann wasserlösliche anorganische Bestanteile aufweisen, beispielsweise Salze.

Gemäß einer weiteren Ausführungsform des vorliegenden Verfahrens wird die erhaltene Schmelze wenigstens einem Wasserbehandlungsschritt ausgesetzt.

Die wasserlöslichen anorganischen Bestandteile der Schmelze können durch Einleitung der Schmelze in ein Wasserbad vollständig oder nahezu vollständig entfernt werden.

Die bei der Wasserbehandlung aus der Schmelze ausgetragenen Salze und Verunreinigungen können beispielsweise aus dem verwendeten Wasser durch Filtration, Membranreinigung, Flotation und/oder Flockung abgetrennt werden und einem Wertstoffrecycling oder einer Deponierung zugeführt werden. Das so gereinigte Wasser kann dem Wasserbehandlungsschritt erneut zugeführt werden.

Gemäß einer weiteren Ausführungsform des Verfahrens kann der Mineralwolleabfall in der Prozesskammer (1) von einer Beschickungsseite (2) zur Austrittsseite (4) transportiert werden, wobei der Mineralwolleabfall mit Hilfe einer Wärmequelle (6) geschmolzen und die Schmelze an der Austrittsstelle (4) abgeführt wird, wobei organische Komponenten des Mineralwolleabfall durch Verbrennung thermisch getrennt und als Rauchgas (5) abgeführt werden.

Die Schmelze des Mineralwolleabfalls auf der der Beschickungsseite (2) der Prozesskammer gegenüberliegenden Austrittsseite (4), kann vorzugsweise kontinuierlich austreten.

Gemäß einer weiteren Ausführungsform kann die an der Austrittsseite (4) erhaltene Mineralwolleschmelze in ein Wasserbad (7) überführt werden, vorzugsweise zur Abkühlung und/oder zur Entfernung von wasserlöslichen anorganischen Verunreinigungen.

Gemäß einer weiteren Ausführungsform kann das Rauchgas gegebenenfalls wenigstens einem weiteren Temperaturbehandlungsschritt und/oder Reinigungsbehandlungsschritt ausgesetzt werden.

Gemäß einer weiteren Ausgestaltung des Verfahrens können die die Prozesskammer als Rauchgas flüchtig verlassenden Komponenten, insbesondere unvollständig oxidierte organische Verbindungen, Metallverbindungen, wie Metalldämpfe, Stäube und andere anorganische Verbindungen einer der Prozesskammer nachgeordneten Nachbrennkammer (7) zugeführt werden, in welcher die vollständige oder nahezu vollständige Oxidation aller noch enthaltenen restlichen organischen Verbindungen erfolgt und die Verweilzeit des Rauchgases in der Nachbrennkammer (7) vorzugsweise > 2 s beträgt und die Temperatur innerhalb der Nachbrennkammer (7) vorzugsweise über 850° C, insbesondere bevorzugt über 1000° C liegt.

Gemäß einer weiteren Ausführungsform kann der Nachbrennkammer 9 zur Reinigung des Rauchgases eine nassen Rauchgasreinigung 12 umfassend mindestens einen Dampfkessel 10, mindestens einer Staubkammer 11, mindestens einer Quenche 13, mindestens einen sauer betriebenen Rotationswäscher 15, mindestens einen alkalisch betriebenen Rotationswäscher 16 und/oder wenigstens ein elektrostatisch betriebener Kondensationsfilter 17 mit gegebenenfalls wenigstens einer katalytischen Nachreinigung 18, nachgeschaltet sein.

Ein weiterer Gegenstand der vorliegenden Erfindung betrifft ein Mineralwoll-Recyclingprodukt, welches aus der Schmelze als glasartige Schlacken erhalten wird.

Ein weiterer Gegenstand betrifft die Verwendung des verfahrensgemäß erhaltenen Mineralwoll-Recyclingprodukts.

Das nach dem erfindungsgemäßen Verfahren erhaltene Mineralwolleschmelzgranulat kann als Baustoff, insbesondere für den Straßen- und Wegebau verwendet werden.

Das Mineralwolleschmelzgranulat, welches als Baustoffe, beispielsweise für den Straßen- und Wegebau verwendet werden kann, weist praktisch die Eigenschaften von Schmelzgranulat auf.

Weiterhin ist die Verwendung des Mineralwollschmelzgranulats zur Herstellung und anschließender Verwendung als Glaswolle bevorzugt.

Das erfindungsgemäße Verfahren wird anhand der nachstehenden Figur näher erläutert.
- Fig. 1: schematischer Aufbau einer Vorrichtung zur Durchführung des Verfahrens;
- Fig. 2: schematischer Aufbau einer Vorrichtung zur Durchführung des Verfahrens mit Rauchgasaufbereitung;
- Fig. 3: schematischer Temperaturverlauf durch den Innenraum einer Prozesskammer bei der Durchführung des Verfahrens zum Recycling von Mineralwolleabfall.

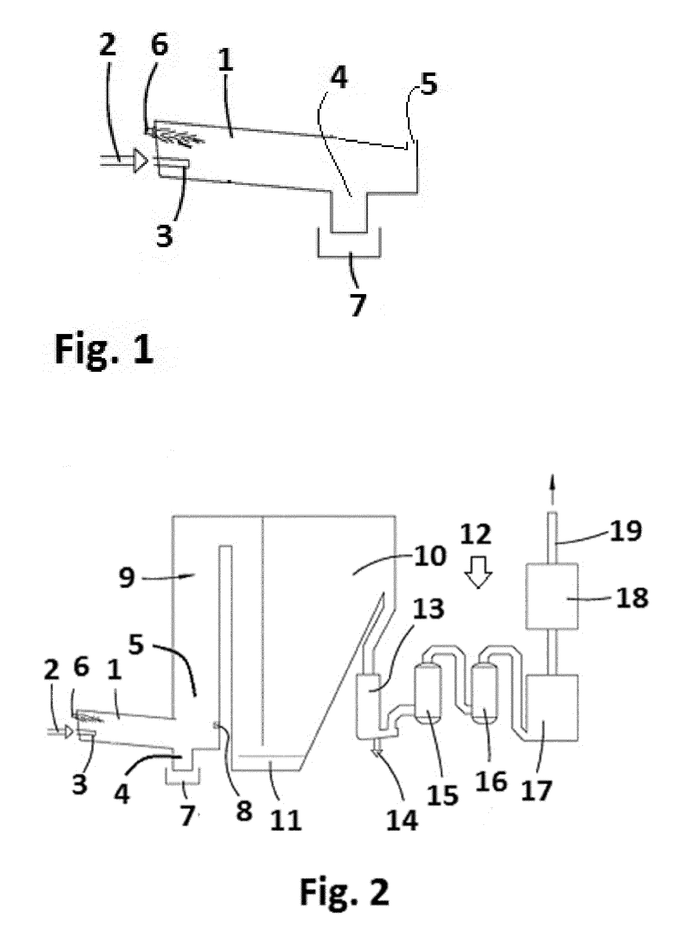

Figur 1 zeigt eine Vorrichtung zur Durchführung des Verfahrens in Form eines Drehrohrofen (1), der als Prozesskammer ein längliches Rohr von 10 m bis 13 m aufweist. Dieses Rohr ist gegenüber der Horizontalen geneigt und mit einem feuerfesten Material ausgemauert. Die Neigung von 2° und das Drehen des Rohres mit 6 bis 8 Umdrehungen pro Stunde [U/h] um seine Längsachse bewirken, dass der sich auf der Beschickungsseite (2) über eine Beschickungsöffnung (3) in das Drehrohr kontinuierlich eingetragene Mineralwolleabfall durch das Rohr hin zu der der Beschickungsseite (2) gegenüberliegenden Austrittsseite (4) bewegt. Dabei wird der zu behandelnde Mineralwolleabfall im Drehrohr (1) ständig in Bewegung gehalten und intensiv durchmischt. Eine Beschickungsvorrichtung (nicht gezeigt) kann an der Beschickungsöffnung (3) angeordnet sein, in die die Mineralwolleabfälle eingeführt werden. Die Beschickungsvorrichtung kann so ausgebildet sein, dass Mineralwolleabfälle zerkleinert, und/oder komprimiert werden. Die bei der Temperaturbehandlung erhaltene Schmelze des Mineralwolleabfalls tritt an der Austrittsstelle (4) aus und kann gegebenenfalls von wasserlöslichen Stoffen, wie Salzen, in einem Wasserbad (7) weiter aufgereinigt werden. Die erkaltete Schlacke kann aber auch ohne Wasserbadbehandlung weiterverarbeitet werden. Entstehende Rauchgase können an der Austrittstelle (5) abgeleitet werden. Die Prozesskammer kann beispielsweise über einen Brenner (6) beheizt werden.

Figur 2 zeigt eine Vorrichtung zur Durchführung des Verfahrens in Form eines Drehrohrofen (1), der als Prozesskammer ein längliches Rohr von 10 m bis 13 m aufweist. Dieses Rohr ist gegenüber der Horizontalen geneigt und mit einem feuerfesten Material ausgemauert. Die Neigung von 2° und das Drehen des Rohres mit 6 bis 8 Umdrehungen pro Stunde [U/h] um seine Längsachse bewirken, dass der sich auf der Beschickungsseite (2) über eine Beschickungsöffnung (3) in das Drehrohr kontinuierlich eingetragene Mineralwolleabfall durch das Rohr hin zu der der Beschickungsseite (2) gegenüberliegenden Austrittsseite (4) bewegt. Dabei wird der zu behandelnde Mineralwolleabfall im Drehrohr (1) ständig in Bewegung gehalten und intensiv durchmischt. Eine Beschickungsvorrichtung (nicht gezeigt) kann an der Beschickungsöffnung (3) angeordnet sein, in die die Mineralwolleabfälle eingeführt werden. Die Beschickungsvorrichtung kann so ausgebildet sein, dass Mineralwolleabfälle zerkleinert, und/oder komprimiert werden. Die bei der Temperaturbehandlung erhaltene Schmelze des Mineralwolleabfalls tritt an der Austrittsstelle (4) aus und kann gegebenenfalls von wasserlöslichen Stoffen, wie Salze, in einem Wasserbad (7) weiter aufgereinigt werden. Die erkaltete Schlacke kann aber auch ohne Wasserbadbehandlung weiterverarbeitet werden. Entstehende Rauchgase können an der Austrittstelle (5) abgeleitet werden. Die Prozesskammer kann beispielsweise über einen Brenner (6) beheizt werden. Auf der Beschickungsseite (2) wird das Drehrohr (1) mit dem zu behandelnden Mineralwolleabfall beschickt. Dieser durchläuft das Drehrohr (1) in einer Zeit von etwa 1,5 Stunden. Größere Teile des Mineralwolleabfalls, können zerkleinert und insbesondere geschreddert sein. Alternativ könne die Mineralwolleabfälle als Ballen verpresst oder in Behälter verpackt sein, um die Kontaminierung der Umgebungsluft bei der Beschickung der Prozesskammer bzw. Einführung des Mineralwolleabfalls in die Beschickungsvorrichtung (nicht gezeigt) durch Mineralwolleabfallfasern zu verhindern. Dieser Mineralwolleabfall durchwandert aufgrund der Drehung des Drehrohres zunächst eine Aufheizphase innerhalb des Drehrohrofens (1). Mit Hilfe einer optionalen Feuerung (6), die sich auf der Beschickungsseite (2) des Drehrohrofens (1) befinden kann, wird die zur Aufwärmung und Schmelzung des Mineralwolleabfalls erforderliche Wärme in den Drehrohrofen eingeleitet, dies erfolgt beispielsweise mit der langgestreckten und mit der Bezugsziffer (6) bezeichneten Flamme.

Der sich auf dem Boden des Drehrohres der Fig. 2 von der Beschickungsseite (2) bis zur Austrittsseite (2) bewegende Mineralwolleabfall wird mittels Brenner (6) und gegebenenfalls weiteren Brenner (nicht gezeigt) in dem gewünschten Temperaturbereich gehalten, um eine vollständige Schmelze des Mineralwolleabfalls zu erreichen, sowie eine Oxidation der organischen Bestandteile im Mineralwolleabfall möglichst vollständig zu erzielen. Die oxidierten organischen Verbindungen sowie bei den in der Prozesskammer vorherrschenden Temperaturen flüchtige metallische Komponenten werden als Rauchgas (5) abtransportiert.

Die Temperatur innerhalb des Drehrohrofens (1) kann mittels Thermoelement (8) und/oder einer Infrarotwärmebild-Kamera (8) überwacht werden, wie in Figur 2 gezeigt.

Innerhalb der Prozesskammer (1) werden dem Mineralwolleabfall die organischen Bestandteile entzogen. Dies erfolgt dadurch, dass die organischen Bestandteile bei den dort herrschenden Temperaturen abdampfen bzw. aufgespalten werden, sich in gasförmige Zwischenprodukte umwandeln und verbrannt werden. Diese Verbrennungsprodukte können zusammen mit gegebenenfalls entstehenden Metalldämpfen, -verbindungen und Stäuben als Rauchgas (5) der Nachbrennkammer (9), wie in Figur 2 gezeigt, zugeleitet werden.

Bevorzugt kann eine kontrollierte Sauerstoffzufuhr z. B. in Form von Luft vorgesehen sein, mit der die Verbrennung aufrechterhalten und/oder unterstützt wird. Die Zugabe des Sauerstoffhaltigen Gases wird auf ein notwendiges Minimum beschränkt, um bei vollständiger Oxidation der organischen Stoffe, die Verwehung von Fasern in nachgeschaltete Anlagenteile zu vermeiden.

Das der Nachbrennkammer (9) zugeführte Rauchgas (5) wird zunächst thermisch bei Temperaturen über 1000°C behandelt, so dass die darin befindlichen restlichen organischen Komponenten komplett oxidiert werden. Die Aufenthaltszeit des Rauchgases in der heißen Zone der Nachbrennkammer (9) ist ausreichend groß und beträgt zwischen 2 und 7 Sekunden. Die ausgebrannten Rauchgase scheiden beim Durchströmen des nachgeschalteten Dampfkessels (10) Stäube ab. Im Anwendungsbeispiel werden diese in einer Staubkammer (11) gesammelt.

Zur Nutzung der Wärmeenergie wird das so behandelte Rauchgas einem Dampfkessel (10) zugeleitet, in welchem es auf Temperaturen von 300° C bis 350° C heruntergekühlt wird. Der Dampfkessel (10) wird mit Wasser unter entsprechendem Überdruck betrieben.

Die abgekühlten Rauchgase werden anschließend einer nassen Rauchgasreinigung (12) zugeführt. Dort wird es, zunächst durch Einspritzen von Wasser auf 70° C bis 80° C in einer Quenche (13) abgekühlt.

Dabei werden wasserlösliche Stoffe und Stäube ausgewaschen und an der in der Figur 2 mit Bezugszeichen (14) dargestellten Stelle abgeführt.

Daran anschließend wird das Rauchgas (5) zunächst einem sauer betriebenen Rotationswäscher (15) zugeführt, in welchem eine Waschflüssigkeit auf Schleuderräder aufgegeben wird, die einen feinen Flüssigkeitsnebel erzeugen. Beim Durchströmen dieses Nebels kommt das Rauchgas (5) in engen Kontakt mit der Waschflüssigkeit, so dass hier weitere Rauchgasbestandteile und auch Feinstäube ausgewaschen und abgeschieden werden.

In ähnlicher Weise wirkt der dem sauer betriebenen Rotationswäscher (15) nachgeschaltete alkalisch betriebene Rotationswäscher (16). In dieser Stufe wird eine Waschflüssigkeit, versetzt, zugegeben, um restliche saure Rauchgasinhaltsstoffe zu entfernen.

Die wenigen noch im Rauchgas befindlichen festen oder flüssigen Schwebstoffe können in einem elektrostatisch betriebenen Kondensationsfilter (17) abgeschieden werden, wie in Figur 2 gezeigt. Das so behandelte Rauchgas kann, wie in Figur 2 gezeigt, im Folgenden einer katalytischen Nachreinigung (18) zugeführt und anschließend als gereinigte Abluft über den Kamin (19) abgegeben werden.

### Verfahrensrelevante Parameter des Anwendungsbeispiels

| | | |
|---|---|---|
| 1. | 1.500 kg/h | Stützbrennstoff im Drehrohr |
| 2. | 3 t/h | Durchsatz Mineralwolleabfall pro Stunde (trocken) |
| 3. | 1.000° C bis 1.250° C | Rauchgastemperatur am Austritt des Drehrohres |
| 4. | 6-8 U/h | Drehgeschwindigkeit |
| 5. | ca. 2,6 t/h | homogen geschmolzener Mineralwolleabfall (trocken) |
| 6. | 1.150 °C | Rauchgastemperatur am Austritt der Nachbrennkammer |

## Patentansprüche

1. Verfahren zum Recycling von Mineralwolleabfall enthaltend Glaswollefasern und/oder Steinwollefasern, **dadurch gekennzeichnet, dass** der Mineralwolleabfall in eine Prozesskammer eingeführt wird und mittels Durchmischung unter thermischer Behandlung in eine Schmelze überführt wird, wobei die Schmelze aus der Prozesskammer ausgetragen wird.

2. Verfahren nach Anspruch 1, wobei die Mineralwollefasern des Mineralwolleabfalls in der Prozesskammer vollständig geschmolzen werden.

3. Verfahren nach Anspruch 1 oder 2, wobei die Prozesskammer ein Drehrohrofen ist.

4. Verfahren nach einem der vorherigen Ansprüche, wobei die Prozesskammer geneigt ist, so dass der Mineralwolleabfall bei der Durchmischung eine Vorwärtsbewegung erfährt und so durch die Prozesskammer bewegt wird.

5. Verfahren nach einem der vorherigen Ansprüche, wobei der Mineralwolleabfall mit einer Geschwindigkeit von ≥ 1 m/h bis ≤ 50 m/h, vorzugsweise von ≥ 2 m/h bis ≤ 30 m/h, bevorzugt von ≥ 5 m/s bis ≤ 20 m/h, und besonders bevorzugt von ≥ 7 m/h bis ≤ 15 m/h, durch die Prozesskammer bewegt wird.

6. Verfahren nach einem der vorherigen Ansprüche, wobei die Verweildauer in der Prozesskammer ≥ 10 min bis ≤ 600 min, vorzugsweise ≥ 30 min bis < 300 min, und bevorzugt > 60 min bis ≤ 90 min, ausmacht.

7. Verfahren nach einem der vorherigen Ansprüche, wobei die Temperatur in der Prozesskammer oder in Temperaturzonen der Prozesskammer in einem Bereich von ≥ 700° C bis ≤ 1500° C, vorzugsweise von ≥ 1100° C bis ≤ 1250° C, und bevorzugt von ≥ 1150° C bis ≤ 1200° C, gehalten wird, vorzugsweise wird der Mineralwolleabfall in der Prozesskammer in unterschiedlich temperierten Prozesszonen behandelt.

8. Verfahren nach einem der vorherigen Ansprüche, wobei organische Bestandteile des Mineralwolleabfalls oxidiert und der Prozesskammer entzogen werden.

9. Verfahren nach einem der vorherigen Ansprüche, wobei der Prozesskammer sauerstoffhaltige Gase zugeleitet werden.

10. Verfahren nach einem der vorherigen Ansprüche, wobei der Mineralwolleabfall in komprimierter Form, in Form von Gebinden und/oder enthaltend in Behältern in die Prozesskammer eingeführt wird.

11. Verfahren nach einem der vorherigen Ansprüche, wobei der Mineralwolleabfall von einer Beschickungsseite (2) zur Austrittsseite (4), während der Mineralwolleabfall mit Hilfe einer Wärmequelle (6) geschmolzen wird, transportiert wird, und die Schmelze an der Austrittsstelle (4) abgeführt wird, wobei organische Komponenten von dem Mineralwolleabfall durch Verbrennung thermisch getrennt und als Rauchgas (5) abgeführt werden.

12. Verfahren nach einem der vorherigen Ansprüche, wobei das Rauchgas (5) wenigstens einem weiteren Temperaturbehandlungsschritt (9) und/oder wenigstens einem weiteren Reinigungsbehandlungsschritt (9) ausgesetzt wird.

13. Verfahren nach einem der vorherigen Ansprüche, wobei die Mineralwolleschmelze in ein Wasserbad (7) überführt wird, vorzugsweise zur Abkühlung und/oder zur Entfernung von wasserlöslichen anorganischen Verunreinigungen.

14. Verfahren nach einem der vorherigen Ansprüche, wobei die in die Prozesskammer (1) als Rauchgas flüchtig verlassenden Komponenten, insbesondere unvollständig oxidierte organische Verbindungen, Metallverbindungen, wie Metalldämpfe, Stäube und andere anorganische Verbindungen einer der Prozesskammer nachgeordneten Nachbrennkammer (9) zugeführt werden, in welcher die vollständige Oxidation aller noch enthaltenen restlichen organischen Verbindungen erfolgt und die Verweilzeit des Rauchgases bevorzugt > 2 s beträgt und die Temperatur innerhalb der Nachbrennkammer (9) bevorzugt über 850° C, insbesondere bevorzugt über 1000° C liegt.

15. Verfahren nach einem der vorherigen Ansprüche, wobei der Nachbrennkammer (9) zur Reinigung des Rauchgases eine nassen Rauchgasreinigung (12) umfassend mindestens einen Dampfkessel (10), mindestens einer Staubkammer (11), mindestens einer Quenche (13), mindestens einen sauer betriebenen Rotationswäscher (15), mindestens einen alkalisch betriebenen Rotationswäscher (16) und/oder wenigstens ein elektrostatisch betriebener Kondensationsfilter (17) mit gegebenenfalls wenigstens einer katalytischen Nachreinigung (18), nachgeschaltet ist.

16. Mineralwoll-Recyclingprodukt, erhältlich nach einem der Ansprüche 1 bis 15.

17. Mineralwoll-Recyclingprodukt nach Anspruch 16, wobei das Mineralwollschmelzgranulat faserfrei ist, und wobei das faserfreie Mineralwollschmelzgranulat vorzugsweise frei von organischen und/oder wasserlöslichen, anorganischen Stoffen ist.

18. Verwendung des Mineralwolle-Recyclingproduktes, nach einem der Ansprüche 16 bis 17, als Baustoff, insbesondere für den Straßen- und Wegebau, vorzugsweise als Glaswolle.
